# EUROPEAN PATENT APPLICATION

(11) **EP 4 438 328 A1**
(43) Date of publication of application: **02.10.2024**
(21) Application number: 24166631.2
(22) Date of filing: 27.03.2024
(51) Int. Cl.: B60C 1/00, C08L 9/06, C08K 3/04, C08L 47/00

(54) **TIRE COMPRISING A TREAD**

(30) Priority: 30.03.2023 US 202318128314
(71) Applicant: The Goodyear Tire & Rubber Company, Akron, OH 44316 (US)
(72) Inventor: LUDWIG, Steve, D-35510 Butzbach (DE); BIER, Anna Katharina, D-63452 Hanau Hanau (DE); EKRAMZADEH, Kimia, D-63450 Hanau (DE); BARRETT, Gary Terence, Sutton Coldfield, B73 5LZ (GB); SPRINGER, Björn, D-63486 Bruchköbel (DE); KAES, Christian, L-9184 Schrondweiler (LU)
(74) Representative: Kutsch, Bernd

(57) **Abstract**

A tire is disclosed having a tread, the tread (10) comprising a rubber composition comprising from 80 phr to 100 phr of one or more solution-polymerized styrene butadiene rubbers; from 80 phr to 200 phr of filler comprising at least 40 phr of carbon black; from 10 phr to 100 phr of one or more liquid diene-based polymers; and from 10 phr to 80 phr of a terpene resin. The tire may be a motorcycle tire.

## Description

### Field of the Invention

The present invention is directed to a tire, preferably to a motorcycle tire.

### Background of the Invention

While considerable progress has been made in improving the performance of sports tires, such as for motorcycles and passenger cars, it is still observed in some cases that the performance of a tire can differ substantially between a cold state of the tire, in which the tire has for instance only the temperature of the environment, and a warmed-up state of the tire. In particular, it is desirable to provide tires having more consistency in performances between such a cold state and a warmed-up state. Moreover, it can be desirable to reach a warmed-up state faster and/or to improve the overall grip level.

### Summary of the Invention

The invention relates to a tire in accordance with claim 1.

Dependent claims refer to preferred embodiments of the invention.

One object of the invention is to provide a tire, preferably one or more of a motorcycle tire, a race tire or a slick tire, with an improved warmup behavior when driving.

Another object of the invention is to provide a tire which has an improved consistency in performance during tire warmup.

Still another object of the invention may be to provide a tire which has an improved dry performance.

The present invention is directed to a tire, the tire having a tread, wherein the tread comprises a rubber composition comprising from 80 phr to 100 phr of one or more solution-polymerized styrene butadiene rubbers; from 80 phr to 200 phr of filler comprising at least 40 phr of carbon black; from 10 phr to 100 phr of one or more liquid diene-based polymers; and from 10 phr to 80 phr of a terpene resin.

Surprisingly, it has been found by the inventors that the use of the terpene resin in such a rubber composition significantly improves warmup behavior and dry grip. The same behavior has not been observed with different resin types. In particular, the tires show more performance consistency. In other words, the driving performance of the tire in a non-warmed-up or cold state is more similar to the performance of the tire in a warmed-up state.

In a preferred embodiment, the one or more solution-polymerized styrene butadiene rubbers have a glass transition temperature within a range of from -1°C to -45°C, preferably of from -4°C to -40°C.

In another preferred embodiment, the filler comprises one or more of from 80 phr to 150 phr of carbon black (preferably, from 90 phr to 130 phr); predominantly carbon black; a carbon black having an iodine number (or in other words, an iodine adsorption number) of at least 180 g/kg, preferably at least 190 or 200 g/kg, and optionally at most 250 g/kg, determined by ASTM D1510 or equivalent; and less than 20 phr of silica (preferably less than 10 phr or less than 5 phr of silica).

In still another preferred embodiment, the rubber composition comprises from 15 phr to 45 phr of the terpene resin, preferably from 15 phr to 30 phr, or to 25 phr of the terpene resin.

In still another preferred embodiment, the resin is an alpha-pinene (-based) terpene resin.

In still another preferred embodiment, the resin has one or more of a softening point within a range of 100°C to 150°C, preferably from 105°C to 140°C; a glass transition temperature within a range of 50°C and 100°C, preferably from 60°C to 90 °C; a weight average molecular weight (Mw) within a range of 200 g/mol and 900 g/mol, preferably from 300 g/mol to 600 g/mol; an aromatic proton content of less than 5%, preferably for less than 2% or less than 1% (as percent of all protons in the resin, as known in the art).

In yet another preferred embodiment, the rubber composition further comprises from 5 phr to 70 phr of oil, preferably from 20 phr to 70 phr, or from 25 phr to 60 phr of oil.

In yet another preferred embodiment, the rubber composition comprises from 95 phr to 100 phr of the one or more solution-polymerized styrene butadiene rubbers. It is also possible that the rubber composition comprises more than 99 phr of such rubbers or even 100 phr of those.

In still another preferred embodiment, the rubber composition further comprises from 1 phr to 10 phr (preferably from 2 phr to 8 phr) of an alkylphenol resin, optionally having a softening point within a range of 120°C and 170°C.

In still another preferred embodiment, the liquid (diene-based) polymer has one or more of a glass transition temperature within a range of -1°C to -30°C; a number molecular weight within a range of 2000 g/mol and 15,000 g/mol (preferably within a range of 2000 g/mol to 10,000 g/mol); one or more of butadiene repeat units and styrene repeat units (preferably both types); a homopolymer structure (in other words, no block structure, in particular no di-block structure).

In still another preferred embodiment, the tire is one or more of: a motorcycle tire; a motorcycle race tire; a motorcycle rear tire; a slick tire; a pneumatic tire; free of grooves entirely surrounding the tire in a circumferential direction; a motorcycle tire comprising two fabric reinforced breaker plies radially covered by at least one spirally wound ply strip; a motorcycle tire comprising a split tread comprising two circumferential tread shoulder portions, each comprising the rubber composition, at least a circumferential tread center portion comprising another rubber composition, wherein both rubber compositions are different from each other.

"Liquid" means herein that a material has a liquid state at a temperature of 23°C.

Liquid polymers are for instance available by the company Cray Valley under the tradename Ricon^{™}, such a Ricon^{™} 100 or Ricon^{™} 184 and others. Typical styrene contents are within a range of 17% to 27% and/or vinyl contents range from 20% to 75% RHC.

In still another preferred embodiment, the rubber composition comprises less than 5 phr (preferably less than 1phr) of coumarone indene resin, or is free of such a resin.

While the present rubber composition may be particularly suitable for motorcycle tires and/or motorcycle race tires, such as slick tires, the composition could also be used for other tires, such as car tires and/or car race tires, e.g., slick tires.

In a preferred embodiment, the tread has two tread shoulder portions and a tread center portion between the two tread shoulder portions, and wherein at least one of the tread shoulder portions comprises the rubber composition. Optionally, the tread center portion is essentially free of said rubber composition. Preferably, both tread shoulder portions comprise the rubber composition.

In yet another preferred embodiment, the tread center portion comprises a different rubber composition than said at least one tread shoulder portion, and wherein the rubber composition of the tread center portion has an at least 5% (preferably 10%) higher abrasion resistance than the rubber composition of the at least one tread shoulder portion. Abrasion resistance is measured herein as 300% modulus (M300) at 23°C with a ring sample under ASTM D412 or equivalent.

In another preferred embodiment, the tire is one or more of: a motorcycle tire; a motorcycle race tire; a motorcycle rear tire; a slick tire; a pneumatic tire; free of grooves entirely surrounding the tire in a circumferential direction; a motorcycle tire comprising two (fabric reinforced, e.g. by polyamide or particularly nylon) breaker plies radially covered by at least one spirally wound (fabric and/or cord reinforced, e.g. including aramid) ply strip; and a motorcycle tire comprising a split tread comprising at least two circumferential tread shoulder portions comprising the rubber composition (or first rubber composition), a circumferential tread center portion comprising another (second) rubber composition, wherein both rubber compositions are different form each other.

In still another preferred embodiment, the tire has two tread shoulder portions having each a tread cap shoulder portion (or layer) and a tread base shoulder portion (or layer) below the respective tread cap shoulder portion (or layer), and wherein the tread cap shoulder portion (or layer) comprises the rubber composition.

In still another preferred embodiment, the tread base shoulder portion (or layer) has a base rubber composition which has an at least 5% (preferably, at least 10%) lower stiffness G'(1%) than the rubber composition of the tread cap shoulder portion (or layer). Stiffness G'(1%) is determined herein with a Rubber Process Analyzer of the company Alpha Technologies at given percentage of strain, a temperature of 100°C and a frequency of 1 Hz, based on ASTM D5289 or equivalent.

In still another preferred embodiment, a tread center portion is provided between the two tread shoulder portions, wherein the tread center portion has a center portion rubber composition which has an at least 5% (preferably at least 10%) higher abrasion resistance than the rubber composition of the tread cap shoulder portion.

In a preferred preferred embodiment, the tire is a motorcycle tire, such as motorcycle slick tire and/or a motorcycle rear tire.

In a preferred embodiment, the rubber composition includes at least one and/or one additional diene-based rubber. Representative synthetic polymers may be the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR.

In another preferred embodiment, the composition can comprise at least two diene-based rubbers, within the limitations of claim 1. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers.

In another preferred embodiment, an emulsion polymerization derived styrene/butadiene (ESBR) can be used having a styrene content of 20 to 28 percent bound styrene or, for some applications, an ESBR having a medium to relatively high bound styrene content, namely, a bound styrene content of 30 to 45 percent. In many cases the ESBR will have a bound styrene content which is within the range of 26 percent to 31 percent. By emulsion polymerization prepared ESBR, it may be meant that styrene and 1,3-butadiene are copolymerized as an aqueous emulsion. Such are well known to those skilled in such art. The bound styrene content can vary, for example, from 5 to 50 percent. In one aspect, the ESBR may also contain acrylonitrile to form a terpolymer rubber, as ESBAR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In another preferred embodiment, a solution polymerization prepared SBR (solution-polymerized styrene butadiene rubber (SSBR) can have a bound styrene content in a range of 5 to 50 percent, preferably 30 to 45 herein. The SSBR can be conveniently prepared, for example, by anionic polymerization in an inert organic solvent. More specifically, the SSBR can be synthesized by copolymerizing styrene and 1,3-butadiene monomer in a hydrocarbon solvent utilizing an organo lithium compound as the initiator. In still another embodiment, the solution styrene butadiene rubber is a tin-coupled polymer. In still another embodiment, the SSBR is functionalized for improved compatibility with silica. In addition, or alternatively, the SSBR is thio-functionalized. This helps to improve stiffness of the compound and/or its hysteresis behavior. Thus, for instance, the SSBR may be a thio-functionalized, tin-coupled solution polymerized copolymer of butadiene and styrene. However, as another option, the SSBR can have any other functionalization known in the art such as amino, alkoxy, carboxy, siloxy, hydroxy and/or other functionalizations.

In one embodiment, a synthetic or natural polyisoprene rubber can be used in addition to the SSBR. Synthetic cis-1,4-polyisoprene and natural rubber are as such well known to those having skill in the rubber art. In particular, the cis 1,4-microstructure content may be at least 90% and is typically at least 95% or even higher.

In one embodiment, cis-1,4-polybutadiene rubber (BR or PBD) is used in addition to the SSBR. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95 °C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646, which are incorporated herein by reference.

A glass transition temperature, or Tg, of an elastomer represents the glass transition temperature of the respective elastomer in its uncured state. A glass transition temperature of an elastomer composition represents the glass transition temperature of the elastomer composition in its cured state.

A Tg is determined as a peak midpoint by a differential scanning calorimeter (DSC) at a temperature rate of increase of 20° C per minute, according to ASTM D3418 or equivalent.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5 phr, preferably less than 3, phr of an additional diene-based rubber or be also essentially free of such an additional diene-based rubber. The terms "compound" and "composition" and "formulation" may be used herein interchangeably, unless indicated otherwise. The terms "rubber" and "elastomer" may also be used herein interchangeably.

Molecular weights of elastomers / rubbers, such as Mn (number average molecular weight), Mw (weight average molecular weight) and Mz (z average molecular weight), are determined herein using gel permeation chromatography (GPC) according to ASTM 5296-11 using polystyrene calibration standards, or equivalent.

A Tg for resins is determined as a peak midpoint by a differential scanning calorimeter (DSC) at a temperature rate of increase of 10° C per minute, according to ASTM D6604 or equivalent.

Preferably, a resin has a softening point above 70° C as determined by ASTM E28 which might sometimes be referred to as a ring and ball softening point.

In another embodiment, an additional resin is selected from the group consisting of coumarone-indene resin (less preferred or preferably even omitted completely), petroleum hydrocarbon resin, terpene polymers/resins, styrene/alphamethylstyrene resins, terpene phenol resin, rosin derived resins and copolymers and/or mixtures thereof.

A coumarone-indene resin preferably contains coumarone and indene as monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cyclopentadiene, and diolefins such as isoprene and piperlyene. Coumarone-indene resins have preferably softening points ranging from 10° C to 160° C (as measured by the ball-and-ring method). Even more preferably, the softening point ranges from 30° C to 100° C.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefines containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above, and are known as C5/C9 copolymer resins. Petroleum resins are typically available with softening points ranging from 10° C. to 120° C. Preferably, the softening point ranges from 30 to 100° C.

In an embodiment, C5 resins are aliphatic resins made from one or more of the following monomers: 1,3-pentadiene (e.g., cis or trans), 2-methyl-2-butene, cyclopentene, cyclopentadiene, and dicyclopentadiene.

In another embodiment, a C9 resin is a resin made from one or more aromatic monomers, preferably chosen from the group of indene, methylindene, vinyl toluene, styrene and methylstyrene (such as alpha-methylstyrene).

In still another embodiment, a C9 modified resin is a resin (such as a C5 resin) which has been modified or functionalized with one or more aromatic monomers, preferably chosen from the group of indene, methylindene, vinyl toluene, styrene and methylstyrene (such as alpha methylstyrene).

Terpene resins preferably comprise polymers of at least one of limonene, alpha pinene, beta pinene and delta-3-carene.

Terpene-phenol resins may be derived by copolymerization of phenolic monomers with terpenes such as limonenes, pinenes and delta-3-carene.

Representative for resins derived from rosins and derivatives thereof are, for example, gum rosin, wood rosin and tall oil rosin. Gum rosin, wood rosin and tall oil rosin have similar compositions, although the amount of components of the rosins may vary. Such resins may be dimerized, polymerized or disproportionated. Such resins may be in the form of esters of rosin acids and polyols such as pentaerythritol or glycol.

A styrene/alphamethylstyrene resin is considered herein to be a (preferably relatively short chain) copolymer of styrene and alphamethylstyrene with a styrene/alphamethylstyrene molar ratio in a range of 0.05 to 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely its styrene and alphamethylstyrene contents and by its glass transition temperature, molecular weight and molecular weight distribution.

In one embodiment, said resin is partially or fully hydrogenated.

In an embodiment, the rubber composition comprises oil, such as processing oil. Oil may be included in the rubber composition as extending oil typically used to extend elastomers. Oil may also be included in the rubber composition by addition of the oil directly during rubber compounding. Oil used may include both extending oil present in the elastomers, and (process) oil added during compounding. Suitable oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils.

Glass transition temperatures (Tg) for oils are determined as a peak midpoint by a differential scanning calorimeter (DSC) at a temperature rate of increase of 10°C per minute, according to ASTM E1356, or equivalent.

In an embodiment, the rubber composition comprises silica. Silica may be for instance pyrogenic/fumed or precipitated silica. In preferred embodiments, precipitated silica is used. Silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined according to ASTM D6556 or equivalent and is described in the Journal of the American Chemical Society, Volume 60, Page 304 (1930). Silica may also be characterized by having a dibutylphthalate (DBP) absorption value in a range of 100 cm³/100g to 400 cm³/100g, alternatively 150 cm³/100g to 300 cm³/100g which is determined according to ASTM D 2414 or equivalent. Silica may have an average ultimate particle size, for example, in the range of 0.01 to 0.05 micron as determined by the electron microscope, although the silica particles may be even smaller, or possibly larger, in size. Various commercially available silicas may be used, such as, only for example herein, and without limitation, silicas commercially available from PPG Industries under the Hi-Sil trademark with designations 210, 315G abd EZ160G; silicas available from Solvay, with, for example, designations of Z1165MP and Premium200MP; and silicas available from Evonik AG with, for example, designations VN2, Ultrasil 6000GR and 9100GR.

In still another embodiment, the rubber composition may comprise pre-silanized and/or hydrophobated silica which may for instance have a CTAB adsorption surface area of between 130 m²/g and 210 m²/g, optionally between 130 m²/g and 150 m²/g and/or between 190 m²/g and 210 m²/g, or even between 195 m²/g and 205 m²/g. The CTAB (cetyl trimethyl ammonium bromide) method for determination of the silica surface area (ASTM D6845) is known to the person skilled in the art.

Some examples of pre-treated silicas (i.e., silicas that have been pre-surface treated with a silane) which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In an embodiment, carbon black includes one or more of N110, N121, N134, N191, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. It can also include one or more further grades not listed herein. Carbon blacks have different iodine absorption values/numbers, which are determined according to ASTM D1510 or equivalent.

In one embodiment, the rubber composition may contain sulfur containing organosilicon compounds or silanes. Examples of suitable sulfur containing organosilicon compounds are of the formula:

Z-Alk-Sₙ-Alk-Z I

in which Z is selected from the group consisting of 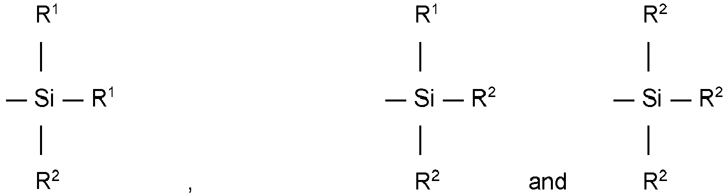 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 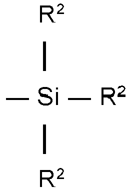 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 10 phr in an embodiment but is preferably present at at most 4 phr because the present composition preferably comprises only limited amounts of silica or no silica at all.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of a (preferably) pneumatic tire of the present invention may for instance be carried out at conventional temperatures ranging from 100°C to 200°C. In one embodiment, the vulcanization is conducted at temperatures which are within a range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The above embodiments and the features mentioned therein may be combined with one another.

### Brief Description of the Drawing

The invention will be described by way of example and with reference to the accompanying drawing in which:

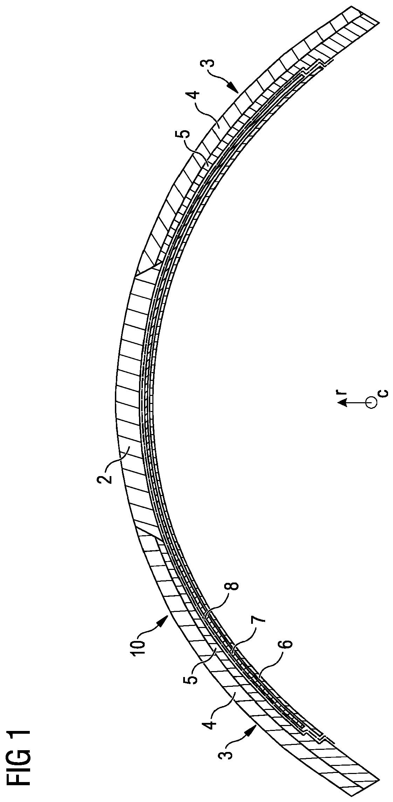

Figure 1 is a schematic partial cross section of a motorcycle tire tread as well as underlying reinforcing reinforced rubber plies, in accordance with a non-limiting embodiment of the present invention.

### Detailed Description of Preferred Embodiments of the Invention

Figure 1 shows an embodiment of a tire tread 10 supported by reinforcing rubber plies. The tread 10 comprises a tread center portion 2 which is arranged between two outer tread shoulder portions 3. Each tread shoulder portion 3 has a tread cap shoulder portion 4 and a tread base shoulder portion 5 arranged below the tread cap shoulder portion 4. A pair of breaker plies comprises a first breaker ply 6 covered by a second breaker ply 7. Both breaker plies 6, 7 are covered by a radially wound ply strip 8 contacting the tread shoulder portion 3 (particularly the tread base shoulder portion 5) and the tread center portion 2.

In accordance with the present embodiment of the tire tread 10, the tread cap shoulder portions 4 comprise a rubber composition as shown in the third column of below Table 1 (i.e. the Inventive Example).

While only the tread cap shoulder portion 4 has in this embodiment the Inventive Example compound in accordance with an embodiment of the present invention, it is also possible that the whole tread or multiple portions of the tread comprise such a rubber compound. In the present embodiment, it is preferred that the tread center portion 2 has a further rubber composition having a higher abrasion resistance than the rubber composition of the tread cap shoulder portion 4. It is also possible, that the tread shoulder portion 3 has only one compound, i.e. without a tread cap / base construction. In the present embodiment, the rubber composition of the tread base shoulder portion 5 is preferably softer than the composition of the tread cap shoulder portion 4, which helps warming up the tire to reach the desired performance as early as possible. However, such a feature is not essential to the present invention which focuses rather on the rubber composition in the cap shoulder area contacting the road when driving, particularly when driving in curves. The shown tread 10 is an example of a rear tire tread of a motorcycle race tire which does not have circumferential grooves. The circumferential direction of the tread 10 and tire is indicated in Figure 1 by the letter "c". The radial direction of the tread 10 or tire is indicated by "r". It extends perpendicularly from the axis of rotation of the tire (not shown). An axial direction, not depicted herein, extends perpendicularly to the radial direction r and the circumferential direction c. The axial direction can also be described as lateral direction. It can also be understood as being in parallel to the axis of the tire.

The ply strip 8 is preferably a spirally wound ply strip 8 which is wound about the breakers 6, 7 with an angle of less than 5° with respect to the circumferential direction of the tire (or, in other words, with respect to the equatorial plane of the tire, which is known to the person skilled in the art). Preferably, such an angle is smaller than 2° or even smaller than 1°. Sometimes reference is also made in this context to a zero-degree ply strip, or overlay ply strip.

**TABLE 1**

| **Ingredients** | **Comparative Example** | **Inventive Example** |
|---|---|---|
| | Amounts in phr | |
| SSBR¹ | 83 | 83 |
| SSBR² | 17 | 17 |
| Liquid polymers³ | 51 | 51 |
| Carbon Black⁴ | 106 | 106 |
| Oils⁵ | 43 | 43 |
| Resin 1⁶ | 20 | 0 |
| Resin 2⁷ | 0 | 20 |
| Resin 3⁸ | 6 | 6 |
| Process Aids⁹ | 2.3 | 2.3 |
| Antidegradants¹⁰ | 4.6 | 4.6 |
| Stearic acid | 3.0 | 3.0 |
| Zinc oxide | 3.1 | 3.1 |
| Sulfur | 1.4 | 1.4 |
| Accelerators¹¹ | 8 | 8 |

| | | |
|---|---|---|
| ¹ Solution-polymerized styrene butadiene rubber having 40% styrene and 14% vinyl and a Tg of -29°C; ² Solution-polymerized styrene butadiene rubber having 40% styrene and 39% vinyl and a Tg of -5°C; ³ Liquid styrene butadiene rubber including 10 phr of a liquid styrene butadiene rubber having a Tg of minus 15°C and 41 phr of a second liquid styrene butadiene rubber having a Tg of minus 21°C; ⁴ Carbon black having an iodine adsorption number of 202 g/kg as Propel X14 from Cabot; ⁵ Oils including a blend of TDAE, SRAE and RAE oils; ⁶ Coumarone indene resin as Novares C120 from Rain Carbon; ⁷ Alpha pinene based terpene resin as Dercolyte A115 from DRT; ⁸ Alkylphenol resin as Koresin from BASF; ⁹ Fatty acid soaps as WB16 from Struktol; ¹⁰ Dihydroquinoline types and phenylenediamine types; ¹¹ Accelerators including TBBS and TBzTD | | |

The rubber compositions shown in Table 1 can preferably be used as a tread or tread cap composition for a race tire, e.g., as a tread cap shoulder compound of the motorcycle tire tread 10 shown in Figure 1. The difference between the Comparative Example and the Inventive Example is that the Inventive Example comprises a terpene resin instead of a coumarone indene resin present in the Comparative Example, each at an amount of 20 phr. After testing, the inventors have unexpectedly discovered that the terpene resin surprisingly improves the warmup behavior of the tire, i.e., decreases the time the tire needs to provide good performance after the vehicle has started driving. While it may have been known in the art that the utilized terpene resin can provide an improved wet traction compared to some other resin types, the effect of improving warmup behavior compared to the comparative resin, in particular under dry conditions, has been newly identified.

Further details in relation to the physical properties of both compounds are shown below in Table 2.

**TABLE 2**

| **Property** | **Comparative Example** | **Inventive Example** |
|---|---|---|
| E* at 30°C^{a} | 8.6 | 6.9 |
| E* at 50°C^{a} | 4.0 | 3.3 |
| E* at 70°C^{a} | 2.6 | 2.2 |
| E* at 90°C^{a} | 2.1 | 1.8 |

| | | |
|---|---|---|
| ^{a} Elastic modulus E* (in MPa), measured for cured rubber samples with an Eplexor 150N device by Netzsch, at 10% pre-strain, 2.5% dynamic strain, and a frequency of 10 Hz. | | |

As derivable from Table 2, the elastic modulus E* has been determined at different temperatures for the rubber compositions of the Comparative Example and the Inventive Example. All values of E* are lower at the same temperature for the Inventive Example compared to the Comparative Example. This indicates a reduced stiffness of the compound in accordance with the Inventive Example, which also indicates an improved dry grip. Notably, the difference in E* between the Comparative Example and the Inventive Example is even higher at low temperatures than at high temperatures so that the Inventive Example provides much better grip at low rubber composition temperatures than the Comparative Example. Moreover, it is remarkable that the difference between the E* values at 30°C and the E* values at 70°C is much lower for the Inventive Example than for the Comparative Example. For instance, the difference in E* between 30°C and 70°C of the Comparative Example is 6 MPa, whereas the corresponding value is only 4.7 MPa for the Inventive Example for the same temperatures. This means that the consistency of the inventive compound has also been improved over the Comparative Example. In other words, the grip and/or stiffness properties of the relatively cold rubber composition and of the warmed-up rubber composition are more similar in the Inventive Example than in the Comparative Example.

Such a behavior has also been confirmed by additional tire testing, where it has been confirmed by test riders that the dry grip level of a tire using the Inventive Example as tread cap shoulder compound is overall improved compared to the dry grip level of a tire having the same construction but the Comparative Example as tread cap shoulder compound. Moreover, also improved performance consistency has been observed in test driving by the test riders.

Another remarkable result consists in that the stiffness of the Inventive Example at very high temperatures, such as at 90°C, does not reduce too much compared to the value of the Comparative Example at the same temperature, which is also desirable. In other words, it is also advantageous that the stiffness does not drop too much at very high temperatures which is fulfilled by the Inventive Example as well.

## Claims

1. A tire having a tread, the tread (10) comprising a rubber composition comprising:
from 80 phr to 100 phr of one or more solution-polymerized styrene butadiene rubbers;
from 80 phr to 200 phr of filler comprising at least 40 phr of carbon black;
from 10 phr to 100 phr of one or more liquid diene-based polymers; and
from 10 phr to 80 phr of a terpene resin.

2. The tire according to claim 1, wherein the one or more solution-polymerized styrene butadiene rubbers have a glass transition temperature within a range of from -1°C to -45°C.

3. The tire according to claim 1 or 2, wherein the filler comprises one or more or all of:
from 80 phr to 150 phr of carbon black;
predominantly carbon black;
a carbon black having an iodine number of at least 180 g/kg;
less than 20 phr of silica.

4. The tire according to at least one of the previous claims, wherein the rubber composition comprises from 15 phr to 45 phr of the terpene resin; and/or wherein the terpene resin is an alpha-pinene terpene resin.

5. The tire according to at least one of the previous claims, wherein the terpene resin has one or more or all of:
a softening point within a range of from 100°C to 150°C;
a glass transition temperature within a range of from 50°C to 100°C;
a weight average molecular weight within a range of from 200 g/mol to 900 g/mol;
an aromatic proton content of less than 5%.

6. The tire according to at least one of the previous claims, wherein the rubber composition further comprises from 5 phr to 70 phr of oil, alternatively from 25 phr to 60 phr of the oil.

7. The tire according to at least one of the previous claims, wherein the rubber composition comprises from 95 phr to 100 phr of the one or more solution-polymerized styrene butadiene rubbers.

8. The tire according to at least one of the previous claims, wherein the rubber composition further comprises from 1 phr to 10 phr of an alkylphenol resin, the alkylphenol resin optionally having a softening point within a range of 120°C to 170°C.

9. The tire according to at least one of the previous claims, wherein the liquid diene-based polymer has one or more or all of:
a glass transition temperature within a range of from -1°C to -30°C;
a number molecular weight Mn within a range of from 2000 g/mol to 15,000 g/mol;
one or more of butadiene repeat units and styrene repeat units;
a homopolymer structure.

10. The tire according to at least one of the previous claims, wherein the rubber composition comprises less than 5 phr of coumarone indene resin.

11. The tire according to at least one of the previous claims, wherein the tire is a motorcycle tire.

12. The tire according to at least one of the previous claims, wherein the tread (10) has two tread shoulder portions (3) and a tread center portion (2) arranged between the two tread shoulder portions (3), wherein at least one of the tread shoulder portions (3) comprises the rubber composition as specified in at least one of the claims 1 to 10 and wherein the tread center portion (2) is free or essentially free of said rubber composition.

13. The tire according to at least one of the previous claims, wherein the tread (10) has two tread shoulder portions (3) and a tread center portion (2) arranged between the two tread shoulder portions (3), wherein the tread center portion (2) comprises a different rubber composition than said at least one tread shoulder portion (3), and wherein the rubber composition of the tread center portion (2) has an at least 5% higher abrasion resistance than the rubber composition of the at least one tread shoulder portion.

14. The tire according to at least one of the previous claims, wherein the tire has two tread shoulder portions (3) having each a tread cap shoulder portion (4) and a tread base shoulder portion (5) radially below the respective tread cap shoulder portion (4), and wherein at least one tread cap shoulder portion (4) comprises the rubber composition as specified in at least one of the claims 1 to 10, and, optionally, wherein the tread base shoulder portion (5) comprises another rubber composition which has an at least 5% lower stiffness G'(1%) than the rubber composition of the tread cap shoulder portion (4).

15. The tire according to at least one of the previous claims, wherein a tread center portion (2) is provided between the two tread shoulder portions (3), and wherein the tread center portion (2) has a tread center portion rubber composition which has an at least 5% higher abrasion resistance than the rubber composition of the tread cap shoulder portion (4).
